# EUROPEAN PATENT SPECIFICATION

(11) **EP 1 643 830 B1**
(45) Date of publication and mention of the grant of the patent: **28.05.2008**
(21) Application number: 04748791.3
(22) Date of filing: 13.07.2004
(51) Int. Cl.: A01K 73/02

(54) **TRAWL APPARATUS**
SCHLEPPNETZ
DISPOSITIF DE CHALUTAGE

(30) Priority: 15.07.2003 NO 20033198
(43) Date of publication of application: 12.04.2006
(73) Proprietor: Aker Seafoods Holding AS, 0250 Oslo (NO)
(72) Inventor: ERNSTEN, Robert, Golfito (CR); Arskog, Roar, Vartdal, N-6150 Orsta (NO); KJAERSTAD, Jan, H., Sovik (NO); NAKKEN, Borge, Fiksdal (NO)
(74) Representative: Münzer, Marc Eric
(86) International application number: PCT/NO2004/000215
(87) International publication number: WO 2005/004593

(56) References cited:
- DD-A5- 289 919
- NO-B- 166 512
- NO-B1- 313 261
- US-A- 1 388 414
- US-A- 1 447 553

## Description

The present invention relates to a trawl apparatus equipped with a means for gathering seafood/biomass and conveying it to a seafood/biomass receiving vessel, as defined in more detail in the preamble of attached claim 1.

During a trawling operation, a trawl is towed behind a trawl vessel using adapted lines with or without otter boards, whereby seafood/biomass such as fish, shrimp and krill and/or other seafood/biomass is gathered in a trawl bag. After this trawl bag has been more or less filled with seafood/biomass, it is normally hauled on board the vessel and emptied. Alternatively, the trawl bag or sack may be emptied whilst floating alongside the vessel. Some types of seafood/biomass, such as for instance, krill, have a short liftetime after being gathered in the trawl and brought to the surface before they die and rapidly begin to decompose, their value as a raw material thus diminishing considerably. In general, it is important for all forms of seafood/biomass that it should come to the vessel undamaged and as quickly as possible for further processing, as delays in this process usually substantially diminish the quality of the seafood/biomass. Seafood/biomass that is subjected to rough handling and crushing through being gathered in a trawl bag and hauled on board the vessel, whereupon the trawl bag is emptied, or by mechanical pumping from the trawl bag for collection on board the vessel, will also be of reduced quality and value because of the damage it suffers. The reduction in value will also extend to by-products from seafood/biomass such as roe, liver or the like. Seafood/biomass that is caught in a traditional manner will also largely be dead the moment it comes aboard the vessel.

In connection with trawl bags, it is known to equip such a bag with a sorting grille or filtering grille to be able to separate out larger units of seafood/biomass and marine animals, as for instance larger fish. The apertures in the sorting or filtering grille will determine what marine animals or seafood/biomass are filtered out of the trawl bag. There are also prior art solutions for separating small fish from the catch using similar systems.

It has also previously been suggested to use different forms of mechanical pump solutions with an inlet opening in the end of the trawl bag so as to be able to pump the filtered content of the trawl bag directly up to a vessel on the surface, but the known solutions have not been particularly successful because of compression at the end of the trawl bag and frequent blockages.

For further illustration of the prior art reference is made to the teachings of US Patents 1447553 and 3440752 and Norwegian Patents 109811, 35544, 166512 and 313261.

Accordingly, there is a substantial need to be able to enhance the efficiency with which undamaged and living seafood/biomass gathered by the trawl is conveyed to a seafood/biomass receiving vessel. The invention is of particular importance for the gathering and conveyance of krill, shrimp and other types of seafood/biomass, including all forms of fish, where conveyance to a production vessel for further processing and continuous, non-stop preservation on board can take place in controlled forms during continuous or prolonged trawling

The apparatus mentioned in the introduction is characterised by the features set forth in the characterising clause of attached claim 1.

The apparatus is characterised in that it can advantageously be used during uninterrupted, continuous or prolonged trawling, where seafood/biomass is also in an uninterrupted or continuous manner over a long period conveyed up to a receiving vessel.

Advantageous embodiments of the apparatus are disclosed in the dependent claims.

The invention will now be described with reference to the attached figures.

Fig. 1 is a schematic illustration of a trawling operation.

Figs. 2 and 3 show on an enlarged scale details of the apparatus shown in Fig. 1.

Fig. 4 shows in even further detail the collecting cage that is an integral part of the apparatus shown in Figs. 1 and 3.

Fig. 5 is a schematic view of a trawling operation which makes use of a preferred embodiment of the apparatus, according to the invention.

Figs. 6, 7 and 8 show on an enlarged scale details of the apparatus shown in Fig. 5, according to the invention.

Fig. 9 shows in even further detail the collecting cage that is an integral part of the preferred apparatus shown in Figs. 5 and 8, according to the invention.

Fig. 10 shows in more detail an example of a cleaning device for mounting in the collecting cage.

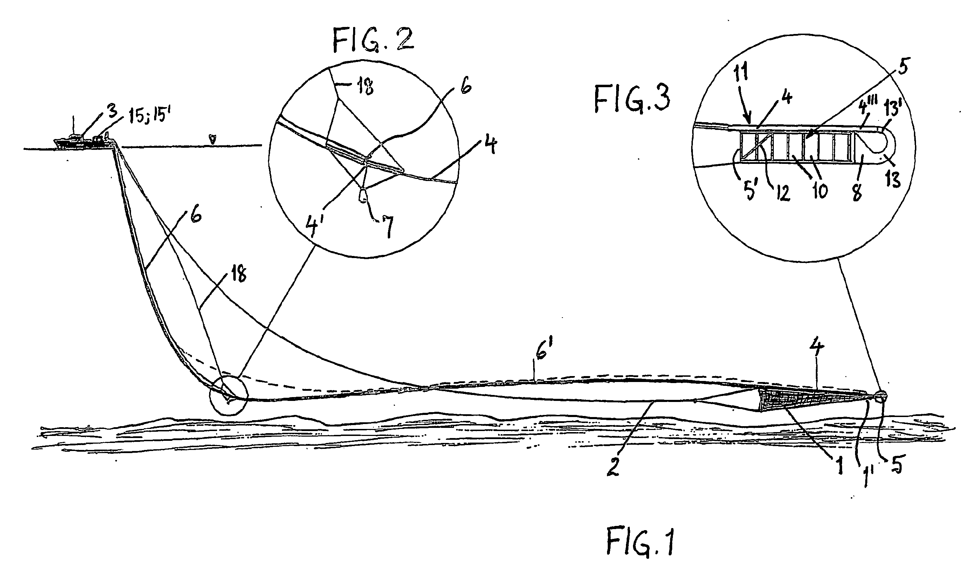

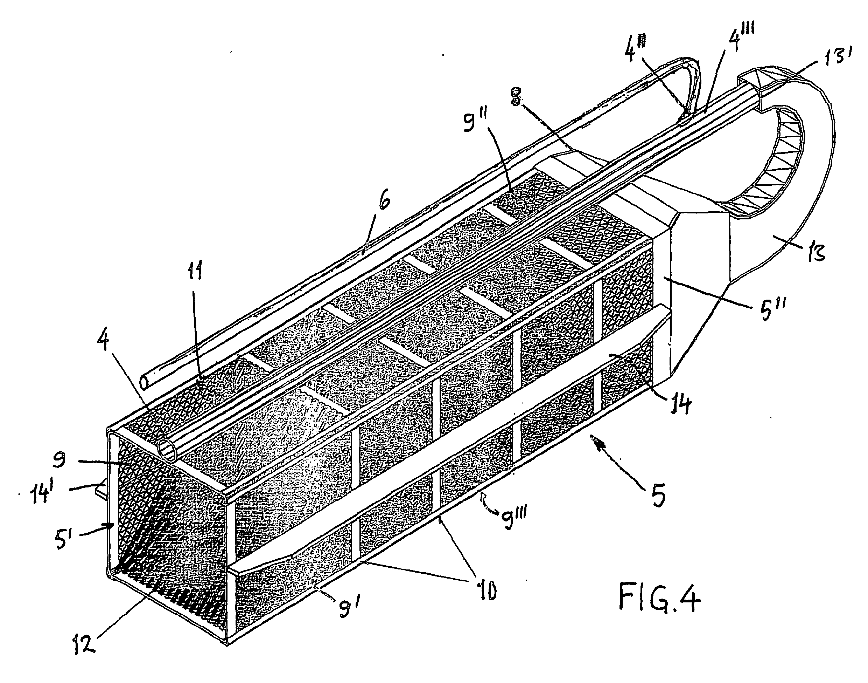

In Fig. 1 the reference numeral 1 indicates a trawl which with the aid of towing lines 2 with or without otter boards or other devices for spreading the trawl opening (not shown) is towed behind a trawl vessel 3. A conveying hose 4 extends from the trawl vessel 3 down towards the trawl and at its end is connected to a collecting cage 5, where the inlet end 5' of the cage 5 is connected to the rear end 1' of the trawl 1. In addition, from the vessel 3 there is provided a supply hose 6 which extends downwards and either is connected to the conveying hose 4 at a random point 4' on the hose 4 between the trawl and the vessel, preferably connected as shown in Fig. 2. Alternatively, the connection can be made at a point 4" close to the rear end 4"' of the conveying hose 4, as shown in Fig. 4, and the supply hose can then be run as indicated by the reference numeral 6' in Fig. 1. It is intended to pass a fluid, for example air or seawater, through the supply hose 6, which, by injector effect on introduction into the conveying hose 4 in the direction of the vessel 3, will cause suction of seafood/biomass via the collecting cage 5 and conveying hose 4 up to the vessel. Alternatively, the movement of fluid may be take place using the fluid displacement principle. In Fig. 1, the supply hose 6 is shown in part in a broken line to illustrate the case where it is connected at the point 4" as shown in Fig. 4. The supply hose 6 can also be uncoupled between the vessel 3 and the connection point 4". The principle of handling and arrangement of the hoses and line can be varied.

As indicated in Fig. 2 on an enlarged scale, a weight 7 may advantageously be attached to the conveying hose to ensure that this is held in position behind the vessel 3. This naturally applies also to the supply hose 6. Adjustment of the position of the weight relative to the height of the collecting cage can be done automatically using wireless sensors and computer-controlled winches.

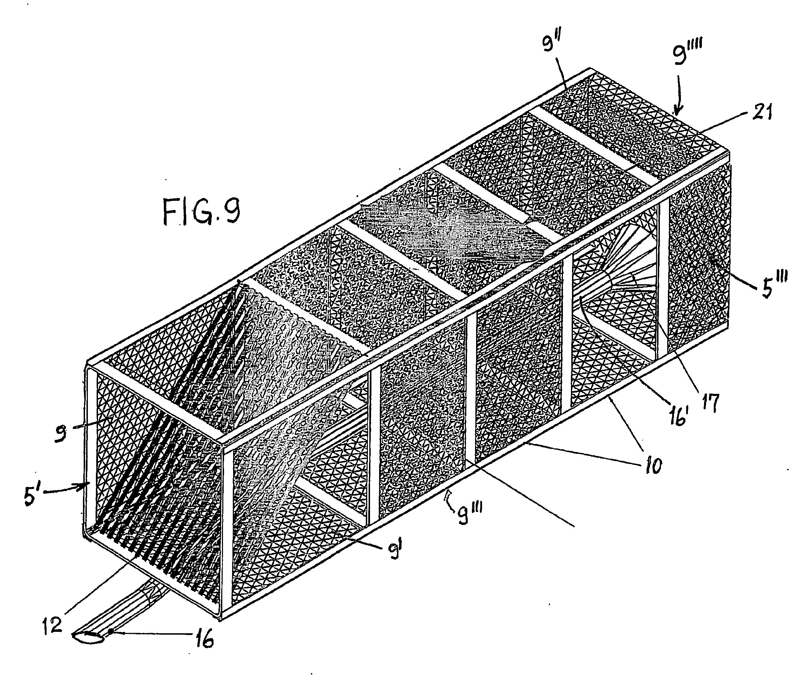

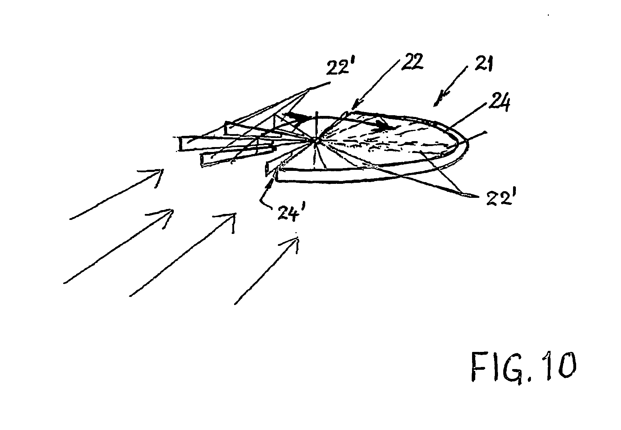

The collecting cage 5 which is preferably arranged at the open end 1' of the trawl, is, as shown in Fig. 4, made in the form of an elongate body with an open front end 5' and a rear end 5" which passes into a funnel 8. The collecting cage 5 is made having walls 9, 9' and roof 9" and bottom 9"'. These walls, roof and bottom may be made in the form of a grille or of a wire netting material or the like, the openings thus provided being suitable for straining water. The walls and roof and bottom may be modularly constructed of sections, as indicated by the reference numeral 10, and joined in an appropriate manner. The sections 10 may advantageously have a circular or polygonal cross-section. In Figs. 4 and 9 the collecting cage is shown, by way of example, having a square cross-section. Mounted on the collecting cage may be a movable or mechanical cleaning device 21, indicated in Fig. 9 and shown in the form of an example in Fig. 10.

At the open front end of the collecting cage 5, indicated by the reference numeral 5', there is, if desired/required, a cage section without a roof, as indicated by the reference numeral 11, so that the collecting cage 5 in that section is open at the top so as to be able to cooperate with a screen or grille 12 that extends from the bottom edge of the opening 5' inwards and upwards in the collecting cage 5. The purpose of the grille is to ensure that seafood/biomass, for example, fish, or foreign objects over a certain size do not pass through the grille, but are led up through the opening 11 and away from the collecting cage 5. It may also be an environmental requirement that fish which are not to be caught by the trawl should be automatically sorted away from the trawl. The grille can guide foreign objects through the opening in the roof of the cage as described above, or alternatively through the sides or bottom of the cage. In a simplified version, it is conceivable that the grille could be rotated 90° or 180° relative to that shown in Figs. 4 and 9 in order to make this possible. If the channelling away of foreign objects is intended to take place, for example, via two side walls, the grille could have a V-shape.

Suitable dimensioning of the apertures that will be found in the grille 12 will allow the grille to be adapted to sort away all objects that are larger than the desired seafood/biomass, for example, krill, shrimp, fish or the like. As shown in Fig. 4, the said funnel 8 passes into a duct portion 13 that is suitably bent so that the duct 13 opening 13' is preferably arranged parallel to the longitudinal direction of the collecting cage 5. The duct 13 is connected to the conveying hose 4 at its end 4"'. The conveying hose 4 is, as indicated above, run up to the vessel 3, and the seafood/biomass that is conveyed to the vessel 3 can be collected on board and further treated or further processed, and preserved. On board the vessel, the conveying hose and the supply hose could be coiled on hose drums with centre runout and swivels to enable the hose length to be easily adjusted whilst the conveyance of seafood/ biomass up to the vessel continues. After or during the conveyance of the seafood/ biomass to the vessel 3, it must be separated from the seawater that accompanies it on its way up. This can be effected, if necessary, by means of a deceleration device which reduces the conveying rate and a suitable screening box for seawater schematically indicated by the reference numeral 15. The fact that the trawl in this way can be emptied continuously whilst it is towed through the water is essential for the quality that the caught seafood/biomass will have, and will consequently also affect the quality of the finished product.

As the seafood/biomass can be conveyed continuously, undamaged and alive up to the vessel, it will also be possible to remove immediately any unwanted seafood/biomass on board and subsequently return it to the ocean in an undamaged and living form. The fisherman also has good control of what he catches and avoids catching large quantities of unwanted seafood/biomass in the trawl bag.

Guide fins 14, 14' which run in the longitudinal direction of the collecting cage 5 are preferably, but not necessarily, arranged on the outside of the collecting cage 5.

The amount of air or other fluid that is to be admitted into the conveying hose 4 by means of suitable devices on the vessel is optimised to facilitate the most efficient continuous emptying of the collecting cage 5 in order to provide optimum conveying conditions for the seafood/biomass that is to be gathered and conveyed up to the vessel.

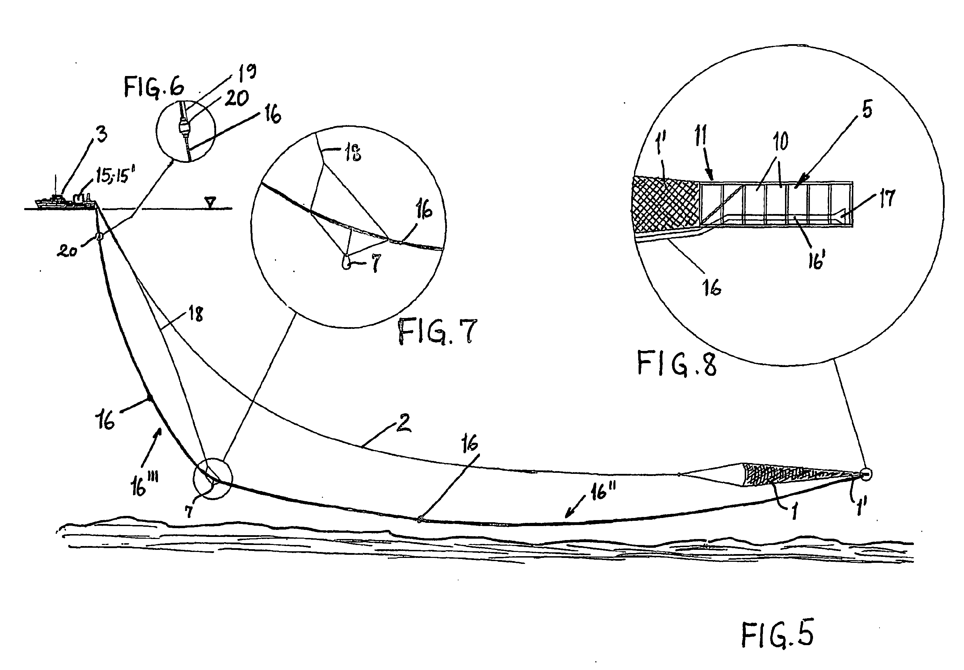

A preferred embodiment of the invention, and which represents a modification of the apparatus that is shown and described in connection with Figs. 1-4, will now be described in more detail with reference to Figs. 5-9 and the main focus will be on the structural changes compared with the apparatus shown in Figs. 1-4. Elements in Figs. 5-9 which have the same design or the same function as that shown in the apparatus in Figs. 1-4 have been given the same reference numerals, and will not be described in more detail below.

Figs. 5-9 show a conveying hose 16 for conveying seafood/biomass gathered in the collecting cage 5 via the trawl 1 up to the trawler vessel 3. From Figs. 5 and 8, it can be seen that the hose 16 in a preferred embodiment runs along the underside of the trawl 1. Then, as shown in Figs. 8 and 9, the hose runs into the collecting cage 5 and preferably along the bottom 9"' thereof in the form of a conveying pipe 16' which at a rear section 5'" of the collecting cage passes into a guiding funnel 17. The funnel opening will advantageously face the back wall 9"" of the collecting cage. As shown in Fig. 7, a weight 7 will be provided on the conveying hose 16 in order to hold it down, just as in the embodiment in Figs. 1 and 2, and the position of the weight may advantageously be in an area where the conveying hose 16 goes from a portion 16" which is in the trawling direction to an upward extending portion 16"'. The weight 7 is connected to the vessel 3 via a connecting line 18, corresponding to that shown in Figs. 1 and 2.

Unlike the solution shown in Figs, 1, 3 and 4 where a fluid, preferably air, is supplied via the supply hose 6 either at a point 4" on the conveying hose 4 or at a point 4' on the conveying hose 4 at the position of the weight 7, in the solution illustrated in Fig. 5 a supply hose 19 supplies air or other fluid under pressure to an injector 20 which is connected to the conveying hose 16 at a point which is at a depth that is substantially smaller than the depth at which the trawl 1 and the collecting cage 5 are located. Thus, it is seen that the injector 20 is located in a upper part of the upward extending portion 16"' of the hose 16. The injector 20 causes substantial suction to be produced in the conveying hose, almost causing a siphon effect in order to draw up seafood/biomass from the collecting cage 5 via the funnel 17, conveying pipe 16' and the hose 16 to the vessel 3 via the injector 20. A considerable advantage of placing the injector 20 substantially closer to the vessel 1 than shown in Fig. 1, is that the conveying path for air or other fluid to the injector is shorter, which makes smaller demands as regards the fluid pressure that will be required in the supply hose 19 in order to bring the seafood/biomass up to the vessel, and thus reduces the power requirement needed for the supply of air or other fluid to the injector. It is also a great advantage in connection with, e.g., inspection, maintenance or the like of the injector 20 that it is not too far beneath the surface of the sea. Adjustment of the level at which the injector is positioned relative to the collecting cage can be done automatically using wireless sensors and computer-controlled winches.

Fig. 10 is a purely schematic illustration of the principle of a possible cage cleaning device 21 consisting of a rotating bladed wheel 22 where the blades 22', when they rotate about an axis of rotation 23 and are under a semi-circular cover 24, will be horizontal or almost parallel to the adjacent wall, bottom or roof of the collecting cage to reduce water resistance, whilst when the blades 22' move outside the front edge 24' of the cover, they will turn to stand almost perpendicular to the adjacent wall, bottom or roof of the cage.

As mentioned in the introduction, the gathering and conveyance of, for instance, krill and other biomass will be critical as regards time, as, the quality of, for example, krill that is to be further treated and processed may easily deteriorate because it dies too long before the processing takes place. Swift conveyance of living individuals up to the vessel and thence directly to a continuous processing process has the effect of ensuring that the protein content and the quality of the gathered seafood/biomass is optimal and considerably better than what can be achieved with the known solutions. As also mentioned in the introduction, the quality of the seafood/biomass such as krill or fish that is first subjected to crushing during the gathering in the trawl bag and is then subjected to further crushing and damage when the trawl is hauled on board the vessel and emptied, or if the trawl is emptied by mechanical pumping, will also be enhanced by using the apparatus described, as the seafood/biomass is subjected to far less rough handling/damage during collection and conveyance to the vessel, and moreover it reaches the vessel whilst still alive.

Although the present invention will be especially suitable for the collection and conveyance of, for example, krill, it will be obvious that the apparatus can also be used for any form of seafood/biomass that has larger or smaller individual dimensions or form. Thus, it should be clear that the invention is not limited to use at sea, but can just as readily be used in fresh water or inland waters or lakes.

The design of the collecting cage 5 shown in the figures is of course not a limitation as regards how the collecting cage may be designed and equipped, or of what suitable materials it is made. There may, for example, be provided devices known per se in the form of sensors, which, for instance, may be wireless, for monitoring the position of the collecting cage in the water, depth, flow etc.

Although the use of filtering grille 12 has been illustrated and described, it may in some circumstances be neither necessary nor desirable.

## Claims

1. A trawl apparatus with a trawl (1) and a means for gathering seafood/biomass and conveying it to a seafood/biomass receiving vessel (3);
- comprising a conveying hose or pipe (4; 16, 16') for conveying seafood/biomass from the trawl (1) to the vessel (3);
- wherein air or other fluid is supplied from the vessel (3) via a supply hose (6; 19) for injection into the conveying hose - or the pipe (4; 16), in order, by injector effect or fluid displacement technique, to bring the seafood/biomass up to the vessel (3);
- wherein the supply of air or other fluid is, via the supply hose (6; 19), adapted to be injected at a point on the conveying hose or pipe (4; 16) by means of an injector (20) in an area of the conveying hose or pipe (4; 16) **characterized in**
- **that** said area of the conveying hose or pipe (4; 16) is an upper area which has a marked upward gradient towards the surface of the sea, such that the injector (20) is placed closer to the vessel than to the trawl (1).

2. A trawl apparatus according to claim 1, **characterized in**
- **that** the trawl (1) has an elongate, rigid or flexible collecting cage (5) which at an inlet opening (5') is connected to the rear end region (1') of the trawl, and from the inlet opening extends into a second portion (5"; 5"').

3. A trawl apparatus according to claim 2, **characterized in**
- **that** said collecting cage (5) has openings for straining water, and is terminated in a downstream portion (5"; 5"') of the cage (5) via a funnel (13; 17).

4. A trawl apparatus according to claim 3, **characterized in**
- **that** a filtering grille (12) is provided to filter away seafood or biomass which is not to be led to said funnel.

5. An apparatus as according to any one of claims 1-4, **characterized in**
- **that** the injector (20) is depth adjustable to be positioned at a required location in said upper area.

6. An apparatus as disclosed in claim 4, **characterized in**
- **that** said sorting or filtering grille (12) is provided at the inlet opening (5') of the collecting cage (5) and is arranged to extend obliquely inwards and upwards, downwards and/or sideways in the collecting cage (5); and
- **that** a portion (11) of rood, bottom and/or walls of the collecting cage (5) located at a downstream end of the grille (12) is open, so that seafood/biomass, for example fish or foreign objects, over a certain size do not pass through the grille (12) but are led through the at least one open portion (11) and away from the collecting cage (5).

7. An apparatus as disclosed in any one of claims 3-6, **characterized in**
- **that** the openings for straining water are formed of a self-cleaning grating or grille structure which may be rigid or flexible.

8. An apparatus as disclosed in claim 7, **characterized in**
- **that** at least one wall, roof or bottom portion of the collecting cage is equipped with a mechanical device for effecting the cleaning of the grating or grille structure.

9. An apparatus as disclosed in any one of claims 2-8, **characterised in**
- **that** the collecting cage (5) is modularly constructed of joined sections (10).

10. An apparatus as disclosed in any one of claims 3-9, **characterized in**
- **that** the funnel is inside the cage (5), the mouth of the funnel (17) facing and spaced from closed aft wall (9"") of the cage (5).

11. An apparatus as disclosed in any one of claims 2-10, **characterized in**
- **that** in connection with, after or during the conveyance of the seafood/biomass from the collecting cage (5) to the vessel (3), there is provided a straining device (15') to separate seafood/biomass from seawater which accompanies it during its conveyance from the collecting cage (5) to the vessel (3), and
- **that** in connection with the straining device there is provided a deceleration device (15) which is designed to reduce the conveying rate of conveyed seafood/biomass.

12. An apparatus according to any one of claims 2-11, **characterized in**
- **that** sensors (21) are provided on or in connection wit the collecting cage (5) for monitoring the position/orientation of the collecting cage (5) in the water, depth, water flow, etc.

## Revendications

1. Dispositif de chalutage muni d'un chalut (1) et de moyens pour rassembler de la nourriture marine/biomasse et la transporter vers un navire de réception de nourriture marine/biomasse (3) ;
- comportant un flexible ou tuyau de transport (4 ; 16, 16') pour transporter la nourriture marine/biomasse depuis le chalut (1) vers le navire (3) ;
- dans lequel de l'air ou un autre fluide est alimenté à partir du navire (3) via un flexible d'alimentation (6 ; 19) pour injection dans le flexible ou tuyau de transport (4 ; 16) pour, par un effet d'injection ou une technique de déplacement de fluide, amener la nourriture marine/biomasse jusque sur le navire (3) ;
- dans lequel l'alimentation de l'air ou d'un autre fluide est, via le flexible d'alimentation (6 ; 19), adaptée pour être injectée au niveau d'un point sur le flexible ou tuyau de transport (4 ; 16) par l'intermédiaire d'un injecteur (20) dans une zone du flexible ou tuyau de transport (4 ; 16), **caractérisé en ce que**
- ladite zone dudit flexible ou tuyau de transport (4 ; 16) est une zone supérieure qui a un gradient vers le haut marqué en direction de la surface de la mer, de telle sorte que l'injecteur (20) est placé plus proche du navire que du chalut (1).

2. Dispositif de chalutage selon la revendication 1, **caractérisé en ce que**
- le chalut (1) a une cage de recueil allongée rigide ou souple (5) qui, au niveau d'une ouverture d'entrée (5'), est reliée à la zone d'extrémité arrière (1') du chalut et, à partir de l'ouverture d'entrée, s'étend dans une seconde partie (5", 5"').

3. Dispositif de chalutage selon la revendication 2, **caractérisé en ce que**
- ladite cage de recueil (5) a des ouvertures pour filtrer l'eau, et se termine dans une partie en aval (5", 5"') de la cage (5) via un entonnoir (13 ; 17).

4. Dispositif de chalutage selon la revendication 3, **caractérisé en ce que**
- une grille de filtrage (12) est fournie pour filtrer de la nourriture marine ou de la biomasse qui n'est pas menée vers ledit entonnoir.

5. Dispositif selon l'une quelconque des revendications 1 à 4, **caractérisé en ce que**
- l'injecteur (20) est ajustable en profondeur pour être positionné au niveau d'un emplacement souhaité dans ladite zone supérieure.

6. Dispositif de chalutage selon la revendication 4, **caractérisé en ce que**
- ladite grille de tri ou de filtrage (12) est agencée au niveau de l'ouverture d'entrée (5') de la cage de recueil (5), et est agencée pour s'étendre en oblique vers l'intérieur et vers le haut, vers le bas et/ou latéralement dans la cage de recueil (5) ; et
- une partie (11) d'une tige, d'un fond et/ou de parois de la cage de recueil (5) située au niveau d'une extrémité en aval de la grille (12) est ouverte, de sorte que la nourriture marine/biomasse, par exemple du poisson ou des objets étrangers, supérieure à une certaine taille ne passe pas à travers la grille (12), mais sont menés à travers la au moins une partie ouverte (11) et loin de la cage de recueil (5).

7. Dispositif selon l'une quelconque des revendications 3 à 6, **caractérisé en ce que**
- les ouvertures pour filtrer l'eau sont formées d'une structure de treillis ou de grille autonettoyante qui peut être rigide ou souple.

8. Dispositif selon la revendication 7, **caractérisé en ce que**
- au moins une partie de paroi, de toit ou de fond de la cage de recueil est munie d'un dispositif mécanique pour effectuer le nettoyage de la structure de treillis ou de grille.

9. Dispositif selon l'une quelconque des revendications 2 à 8, **caractérisé en ce que** la cage de recueil (5) est construite de manière modulaire de tronçons reliés (10).

10. Dispositif selon l'une quelconque des revendications 3 à 9, **caractérisé en ce que** l'entonnoir est à l'intérieur de la cage (5), l'embouchure de l'entonnoir (17) étant dirigée vers la paroi arrière fermée (9"") de la cage (5), et espacée de celle-ci.

11. Dispositif selon l'une quelconque des revendications 2 à 10, **caractérisé en ce que**
- en association avec, après ou pendant le transport de la nourriture marine/biomasse à partir de la cage de recueil (5) vers le navire (3), des moyens de filtrage (15') sont fournis pour séparer la nourriture marine/biomasse de l'eau de mer qui l'accompagne pendant son transport à partir de la cage de recueil (5) vers le navire (3) ; et
- en association avec le dispositif de filtrage, un dispositif de décélération (15) est fourni, qui est conçu pour réduire la vitesse de transport de la nourriture marine/biomasse transportée.

12. Dispositif selon l'une quelconque des revendications 2 à 12, **caractérisé en ce que**
- des capteurs (21) sont agencés sur ou en association avec la cage de recueil (5) pour surveiller la position/orientation de la cage de recueil (5) dans l'eau, la profondeur, l'écoulement d'eau, etc.

## Patentansprüche

1. Schleppnetzeinrichtung mit einem Schleppnetz (1) und Mitteln zur Sammlung von Fischen und Meeresfrüchten/Biomasse und deren Beförderung zu einem Fangschiff (3);
- mit einer Förderschlauch oder -rohr (4; 16, 16') für die Beförderung der Fische und Meeresfrüchte/Biomasse vom Schleppnetz (1) zum Schiff (3);
- worin Luft oder ein anderes Fluid vom Schiff (3) über einen Zufuhrschlauch (6; 19) zum Einblasen bzw. -spritzen in den Förderschlauch oder das Förderrohr (4; 16) zugeführt wird, um durch Injektorwirkung oder eine Fluidverdrängungstechnik die Fische und Meeresfrüchte/Biomasse zum Schiff (3) heraufzubringen;
- worin die zugeführte Luft oder anderes Fluid über den Zufuhrschlauch (6; 19) an einem Punkt des Förderschlauches oder -rohres (4; 16) durch einen Injektor (20) in einen Bereich des Förderschlauches oder -rohres (4; 16) eingeblasen bzw. eingespritzt werden kann,
**dadurch gekennzeichnet, dass**
- der genannte Bereich des Förderschlauches oder -rohres (4; 16) ein oberer Bereich ist, der eine deutliche Aufwärtsneigung zur Meeresoberfläche hin besitzt, so *dass der Injektor (20) näher am Schiff als am Schleppnetz (1) angeordnet ist.*

2. Schleppnetzeinrichtung nach Anspruch 1, **dadurch gekennzeichnet, dass**
- das Schleppnetz (1) einen länglichen, starren oder flexiblen Sammelkäfig (5) besitzt, der an einer Eintrittsöffnung (5') mit dem hinteren Endbereich (1') des Schleppnetzes verbunden ist und sich von der Eintrittsöffnung in einen zweiten Bereich (5", 5"') hinein erstreckt.

3. Schleppnetzeinrichtung nach Anspruch 2, **dadurch gekennzeichnet, dass**
- der Sammelkäfig (5) Öffnungen für Wasserabzug besitzt und in einem stromab gelegenen Abschnitt (5", 5"') des Käfigs (5) über einen Trichter (13; 17) abgeschlossen wird.

4. Schleppnetzeinrichtung nach Anspruch 3, **dadurch gekennzeichnet, dass**
- ein Filtergitter (12) zur Verfügung steht, um Fische und Meeresfrüchte oder Biomasse herauszufiltern, die dem Trichter nicht zugeführt werden sollen.

5. Einrichtung nach einem der Ansprüche 1 bis 4, **dadurch gekennzeichnet, dass**
- der Injektor (20) in seiner Tiefe einstellbar ist, so dass er an einer erforderlichen Stelle im genannten oberen Bereich positioniert werden kann.

6. Einrichtung, wie in Anspruch 4 offenbart und **dadurch gekennzeichnet, dass**
- das Sortier- oder Filtergitter (12) an der Eintrittsöffnung (5') des Sammelkäfigs (5) angebracht und so eingerichtet ist, dass es sich im Sammelkäfig (5) schräg nach innen und oben, nach unten und/oder zur Seite erstreckt; und
- dass ein am stromabwärts gelegenen Ende des Gitters (12) befindlicher Abschnitt (11) des Daches, Bodens und/oder der Wände des Sammelkäfigs (5) offen ist, so dass Fische und Meeresfrüchte/Biomasse, zum Beispiel Fische oder fremde Gegenstände, die eine bestimmte Grösse überschreiten, nicht durch das Gitter (12) laufen, sondern durch den zumindest einen offenen Abschnitt (11) und vom Sammelkäfig (5) weg geleitet werden.

7. Einrichtung, wie in einem der Ansprüche 3 bis 6 offenbart und **dadurch gekennzeichnet, dass**
- die Öffnungen für den Abzug des Wassers aus einer selbstreinigenden Gitterstruktur gebildet werden, die starr oder flexibel sein kann.

8. Einrichtung, wie in Abschnitt 7 offenbart und **dadurch gekennzeichnet, dass**
- der zumindest eine Wand-, Dach- oder Bodenabschnitt des Sammelkäfigs mit einer mechanischen Vorrichtung ausgerüstet ist, um die Reinigung der Gitterstruktur auszuführen.

9. Einrichtung, wie in einem der Ansprüche 2 bis 8 offenbart und **dadurch gekennzeichnet, dass**
- der Sammelkäfig (5) aus verbundenen Segmenten (10) modular aufgebaut ist.

10. Einrichtung, wie in einem der Ansprüche 3 bis 9 offenbart und **dadurch gekennzeichnet, dass**
- der Trichter sich innerhalb des Käfigs (5) befindet, während die Mündung des Trichters (17) der geschlossenen Achterwand (9"") des Käfigs (5) zugewandt und von ihr beabstandet ist.

11. Einrichtung, wie in einem der Ansprüche 2 bis 10 offenbart und **dadurch gekennzeichnet, dass**
- in Verbindung mit, nach oder während der Förderung der Fische und Meeresfrüchte/Biomasse aus dem Sammelkäfig (5) zum Schiff (3) eine Siebvorrichtung (15') zur Verfügung steht, um die Fische und Meeresfrüchte/Biomasse von dem Seewasser abzutrennen, mit dem zusammen sie vom Sammelkäfig (5) zum Schiff (3) gefördert werden, und
- in Verbindung mit der Siebvorrichtung eine Verlangsamungsvorrichtung (15) zur Verfügung steht, die so ausgelegt ist, dass sie die Fördergeschwindigkeit der geförderten Fische und Meeresfrüchte/Biomasse verringert.

12. Einrichtung nach einem der Ansprüche 2 bis 11, **dadurch gekennzeichnet, dass**
- Sensoren (21) an oder in Verbindung mit dem Sammelkäfig (5) zur Verfügung stehen, um die Position/Ausrichtung des Sammelkäfigs (5) im Wasser, die Tiefe, die Wasserströmung usw. zu überwachen.
